# EUROPEAN PATENT APPLICATION

(11) **EP 3 106 286 A1**
(43) Date of publication of application: **21.12.2016**
(21) Application number: 16174564.1
(22) Date of filing: 15.06.2016
(51) Int. Cl.: B29C 65/56, B29C 65/02, B29C 65/72, B29D 30/16, B29D 30/30, B29D 30/58, B29K 9/00, B29K 21/00, B29K 105/16, B29K 509/00, B29L 30/00

(54) **METHOD OF SECURING SPLICES IN CURABLE RUBBER ARTICLES**

(30) Priority: 16.06.2015 US 201514740659
(71) Applicant: The Goodyear Tire & Rubber Company, Akron, Ohio 44316 (US)
(72) Inventor: FRANTZ, David Mark, Norton, OH Ohio 44203 (US); SANDSTROM, Paul Harry, Cuyahoga Falls, OH Ohio 44223 (US); SEGATTA, Thomas Joseph, Copley, OH Ohio 44321 (US)
(74) Representative: Kutsch, Bernd

(57) **Abstract**

A method of securing a splice (10, 110) between two ends (11, 12, 111, 112) of an uncured first curable rubber compound is disclosed. The method comprises the step of inserting a fastener (13, 113, 18, 118) into both of the two ends (11, 12, 111, 112), the fastener (13, 113, 18, 118) consisting of an uncured second curable rubber compound. Also, a method of building a tire is disclosed, the method comprises the steps of: applying a length of tread stock to a tire build on a tire building machine, wherein the tread stock comprises an uncured first curable rubber compound comprising a diene based elastomer and from 70 to 200 phr of silica, the length of tread stock having two ends (11, 12, 111, 112); opposing the two ends (11, 12, 111, 112) as a splice (10, 110); and inserting a fastener (13, 113, 18, 118) into both of the two ends (11, 12, 111, 112) to secure the splice (10, 110), the fastener (13, 113, 18, 118) consisting of an uncured second curable rubber compound.

## Description

### Background

Many rubber articles are made from extruded, calendered, or molded components whose ends are adjoined to form a continuous surface. Each set of adjoined ends is referred to as a splice.

Splices are a well-known source of uniformity problems in curable rubber articles. Splices tend to induce non-uniformities in rubber articles that can result in inconsistent product performance. Splicing the ends of an uncured rubber strip, such as a tire tread, can be significantly more challenging where the rubber composition of the strip contains a high content of precipitated silica, where the content of such silica in the rubber composition can significantly exceed the content of the rubber itself. Such high content of silica may reduce the building tack of the uncured rubber composition.

Methods have been proposed to ensure splice integrity for the useful life of a rubber article. These attempts typically include using a hydrocarbon-based adhesive solvent or cement to secure a splice. For example, skived tread splices are sometimes secured using a hydrocarbon-based rubber solvent or cement. However, the use of hydrocarbon cements is undesirable due to environmental concerns. It can also be difficult to use a solvent or cement to secure a butt splice (i.e, a splice in which there is no rubber overlap at the adjoining location), which is used in many types of rubber articles.

There is a continuing need for a method for securing a splice in a curable rubber article. The method should also be effective for all types of splices.

### Summary of the Invention

The invention relates to a method in accordance with claim 1, claim 13 or claim 14.

Dependent claims refer to preferred embodiments of the invention.

The invention is directed toward methods of securing a splice in a curable rubber article and toward splices secured using these methods.

As used herein, the term "curable rubber article" refers to an article made from a compound containing one or more types of rubber having double bonds therein and being sulfur-curable.

It has now been found that splices in curable rubber articles may be improved by inserting one or more elongate fasteners preferably made of a stiff rubber compound. The fasteners preferably include a compound comprising syndiotactic 1,2-polybutadiene having a melting point of less than 175°C. Having these fasteners inserted into the splice tends not to affect the uniformity of the rubber article, because the syndiotactic 1,2-polybutadiene layer melts into the rubber article during vulcanization.

Furthermore, the syndiotactic 1,2-polybutadiene is crosslinked, or cures, with the rubber article during vulcanization. Thus, the fasteners made of syndiotactic 1,2-polybutadiene do not create a significant size bulge in the rubber article above splices secured using methods of the invention. Significant size bulges in a curable rubber article can be a source of uniformity problems. In addition, rubber compounds used to make rubber articles do not have to contain syndiotactic 1,2-polybutadiene for methods of the invention to be useful or for splices resulting from methods of the invention to be secure.

Methods of the invention include inserting one or more elongate fasteners into a splice and two ends of uncured rubber in a curable rubber article with syndiotactic 1,2-polybutadiene, and adhering the syndiotactic 1,2-polybutadiene to the uncured rubber. Typically, the syndiotactic 1,2-polybutadiene is adhered to the uncured rubber using heat and pressure. Preferably, the syndiotactic 1,2-polybutadiene is melted in the uncured rubber at a temperature of at least 150°C and not greater than 175°C and under enough pressure to adhere the syndiotactic 1,2-polybutadiene to the compound. Generally, the melt process is performed in less than 10 seconds. These insertion and adhering processes take place prior to vulcanization of the rubber article. The curable rubber article having the syndiotactic 1,2-polybutadiene therein is subsequently cured using methods known in the art.

The preferred syndiotactic 1,2-polybutadiene generally has a relatively low melting point that approximates the temperature that the rubber article reaches near the end of its cure cycle. Syndiotactic 1,2-polybutadiene having this approximate melting point tends not to remelt prior to the latter portion of the cure cycle. If the syndiotactic 1,2-polybutadiene tends to melt prior to the latter part of the cure cycle, then the splice is more likely to come apart before vulcanization. In one embodiment, the melting point ranges from 40 to 170°C. In one embodiment, the melting point ranges from 50 to 150°C. The syndiotactic 1,2-polybutadiene elongate fasteners are typically from 0.8 mm (or about 0.03125 inch) to 6.5 mm (or about 0.25 inch) thick, and from 6.5 mm (or about 0.25 inch) to 100 mm (or about 4 inch) long. The methods of the invention and splices resulting therefrom are applicable to any type of splice, including butt and skived splices.

### Brief Description of the Drawings

Figure 1 is a cross-sectional view of a butt splice secured with a staple in accordance with methods of the invention; and
Figure 2 is a cross-sectional view of a skived splice secured with a pin in accordance with methods of the invention.
Figure 3 is a cross-sectional view of a butt splice secured with a pin in accordance with methods of the invention; and
Figure 4 is a cross-sectional view of a skived splice secured with a staple in accordance with methods of the invention.

### Description of Example Embodiments

The invention is directed toward methods for securing splices in curable rubber articles. Examples of curable rubber articles useful in the invention include, tires, hoses, conveyor belts, tubes, bladders and belts. It has found that, by inserting fasteners made with a stiff curable rubber compound in these types of rubber articles, splices can be effectively secured.

Any type of uncured, but curable, rubber article, or component thereof, made from a first rubber compound containing any unsaturated rubber that is sulfur-curable is useful in methods of the invention. Rubber compounds useful in the invention typically contain natural rubber and/or synthetic rubber, silica, carbon black, oil, curing agents and accelerators in amounts as are known in the art. These types of rubber compounds are well known for making rubber articles, such as tires, belts, hoses, conveyor belts, tubes and bladders. In particular, tread compounds with high silica contents ranging from 50 to 150 phr that are difficult to splice are especially amenable to the methods of the invention.

For example, high silica containing uncured rubber compounds disclosed in US-B-8,312,905 and US-B-8,302,643 are useful in methods of the invention. In general, rubber compounds having a higher level of unsaturation have a greater number of potential cross-link sites and a higher probability of bonding with syndiotactic 1,2-polybutadiene placed in splices in rubber articles. Thus, using rubber compounds having higher degrees of unsaturation are most preferred in methods of the invention.

In general, any type of stiff rubber compound that can be formed into insertable fasteners that can be vulcanized with unsaturated rubber compounds is useful in the present invention.

In one embodiment, the fasteners may be made from a compound comprising syndiotactic 1,2-polybutadiene. For example, the syndiotactic 1,2-polybutadiene disclosed in US-A-5,278,263 is useful in the invention. The syndiotactic 1,2-polybutadiene can be used in methods of the invention in any form that facilitates formation of fasteners suitable for insertion into a splice.

In one embodiment, the syndiotactic 1,2-polybutadiene polymers has a melting point ranging from 40 to 170°C, alternatively from 50 to 150°C. With this range of melting temperatures, the syndiotactic 1,2-polybutadiene can efficiently be adhered to the rubber compound using heat and pressure.

In one embodiment, the syndiotactic 1,2-polybutadiene has a vinyl content on average of at least 80 percent by number and of not greater than 95 percent. By "vinyl content," it is meant the weight percent of the polymer which has the vinyl structure. Preferably, the syndiotactic 1,2-polybutadiene used in the invention also has a crystallinity of at least 40 percent and of not greater than 60 percent. Syndiotactic 1,2-polybutadiene compounds may have these characteristics in order to insure that the syndiotactic 1,2-polybutadiene used in the invention is sufficiently thermoplastic for methods of the invention. An example of syndiotactic 1,2-polybutadiene that is useful in the invention is disclosed in US-A-5,307,850.

When using syndiotactic 1,2 polybutadiene in the fastener, the syndiotactic 1,2 polybutadiene may be used alone or in a rubber compound including additives as listing above and optionally other elastomers.

In one embodiment, the fasteners may be made from a rubber compound that has been cooled to stiffen the compound such the fasteners are insertable into the rubber compound of rubber article to be spliced. In this embodiment, the fasteners may be made from a rubber compound that is identical to that to the rubber compound of the rubber article to be spliced. In this embodiment, the fasteners are cooled to a temperature low enough to prevent flexure of the fastener during the insertion. Shaped fasteners may be cooled cryogenically, for example, to a temperature below the glass transition temperature of the fastener compound, and then the cooled fasteners may be immediately inserted into the splice. Glass transition temperature of a rubber compound may be conveniently determined, for example, by differential scanning calorimetry as the inflection point of a plot of heat flow versus temperature taken at a scanning rate of 10 °C per minute.

In various embodiments, the stiff rubber compound used in the invention is shaped into fasteners such as pins, screws or staples. The fasteners may have a length sufficient to penetrate at least halfway into the depth of the spliced material. In one embodiment, the fasteners have a length ranging from 6.5 mm (or about 0.25 inch) to 100 mm (or about 4 inch), and a thickness ranging from 0.8 mm (or about 0.03125 inch) to 6.5 mm (or about 0.25 inch).

Fasteners made be made from stiff rubber compound using molding techniques as are known in the art, such as injection molding. Alternatively, pins for example may be made by punching from an extruded sheet of material.

Generally, methods of the invention are performed during construction of curable rubber articles. It is during construction that rubber components are configured to form rubber articles, and the configuration process typically involves splicing two ends of rubber components together.

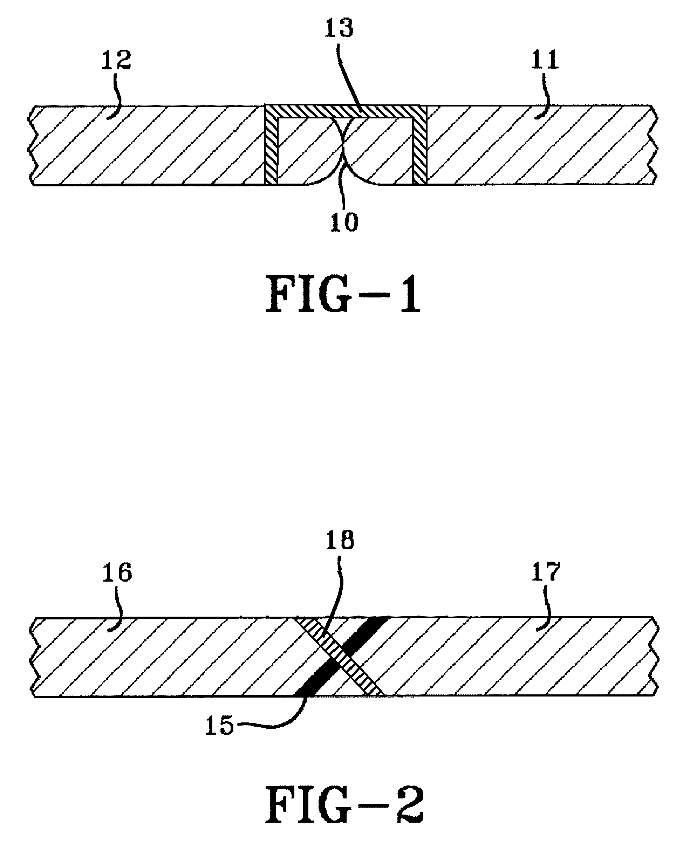

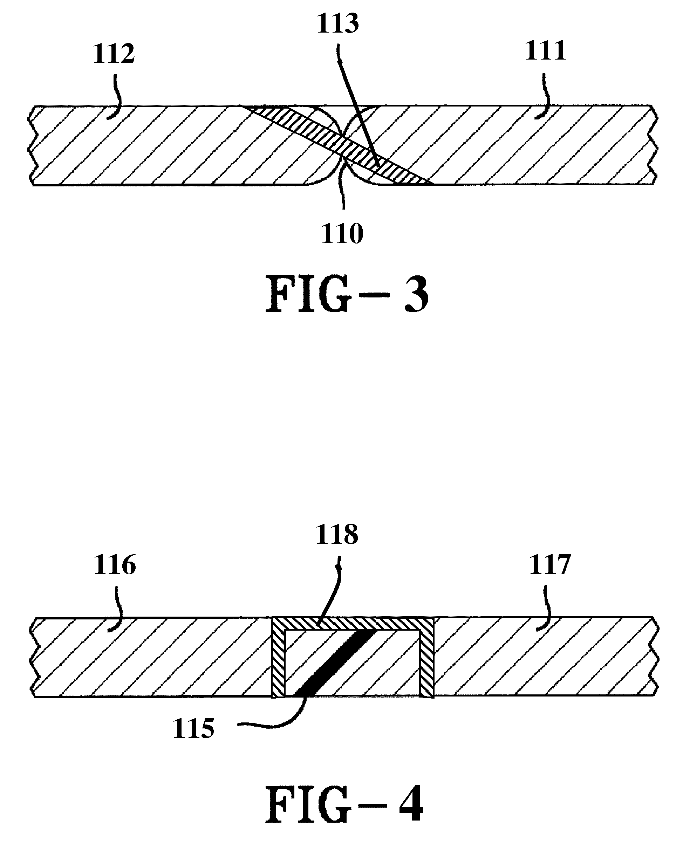

In splicing a rubber article, two ends of a rubber component are adjoined, as a stiffened rubber fastener is applied to the rubber component in such a matter that the fastener penetrates the splice and two ends of the rubber component. Figures 1 through 4 show a cross-sectional view of a splice joined by a fastener. Figures 1, 3 shows a butt splice 10, 110 created by adjoining two ends of uncured rubber 11, 111 and 12, 112. Butt splice 10, 110 is joined by an inserted staple 13 or pin 113 of stiff rubber compound. Once applied, staple 13 or pin 113 is adhered and cured to the rubber 11, 111 and 12, 112 using heat and pressure. This adhering and curing step tends to secure the staple 13 or pin 113 and the splice 10, 110. Figures 2, 4 shows a skived splice 15, 115 created by adjoining two ends of uncured rubber 16, 116 and 17, 117. Skived splice 15, 115 is joined by an inserted pin 18 or staple 118 of stiffened rubber compound. Once applied, pin 18 or staple 118 is adhered and cured to the rubber 16, 116 and 17, 117 using heat and pressure.

The two types of splices shown in the Figures are merely exemplary of the splices in which methods of the invention may be used. For example, staples may be used in both butt splices as shown in Figure 1, as well as in skive splices as shown in Figure 4. Pins may be use in skived splices as shown in Figure 2, as well as in butt splices as shown in Figure 3. Further, fasteners may be inserted at varying angles with respect to the splice angle. For example, Figure 2 shows the pin 18 inserted at an angle of 90° with respect to the splice angle. The pin may be inserted at any angle with respect to the splice. In one embodiment, the pin is inserted at an angle ranging from 45 to 90° or from 45 to 80° with respect to the splice angle.

The splice fasteners are distributed axially (with respect to the tire axial and radial directions) across the splice, with a plurality of fasteners spaced appropriately to ensure splice integrity. Such spacing may be determined without undue experimentation. In one embodiment, the axial distance between adjacent fasteners ranges from 0.5 to 5 cm. In one embodiment, the axial distance between adjacent fasteners ranges from 1 to 4 cm.

Heat and pressure are used to melt the syndiotactic 1,2-polybutadiene to adhere it to the rubber compound, such as during a tire curing process in a mold. Enough heat and pressure are used to sufficiently melt the syndiotactic 1,2-polybutadiene. If too little heat and pressure are used, then the syndiotactic 1,2-polybutadiene may not penetrate into the rubber compound and, thus, not have sufficient mechanical adhesion to hold the splice together. Enough heat and pressure are applied to the syndiotactic 1,2-polybutadiene to melt it as observed by the human eye. Typically, it takes about 5 to 10 seconds for the syndiotactic 1,2-polybutadiene to melt.

Once melted, while the rubber article is cured, the syndiotactic 1,2-polybutadiene can be vulcanized with the rubber compound that is included in the rubber article. The rubber article can be vulcanized using methods known in the art.

## Claims

1. A method of securing a splice (10, 110) between two ends (11, 12, 111, 112) of an uncured first curable rubber compound, the method comprising the step of inserting a fastener (13, 113, 18, 118) into both of the two ends (11, 12, 111, 112), the fastener (13, 113, 18, 118) consisting of an uncured second curable rubber compound.

2. The method of claim 1, wherein the second curable rubber compound comprises syndiotactic 1,2-polybutadiene.

3. The method of claim 1 or 2, wherein the second curable rubber compound is cooled to a temperature below the glass transition temperature of the second curable rubber compound.

4. The method of at least one of the previous claims, wherein the fastener (13, 113, 18, 118) comprises an elongate member having a length to width (L/W) ranging from 3:1 to 20:1, preferably from 5:1 to 20:1 or from 10:1 to 20:1, and/or wherein the fastener (13, 113, 18, 118) is an elongate pin (18, 113).

5. The method of at least one of the previous claims, wherein the fastener (13, 113, 18, 118) is a U-shaped or bridge-shaped staple (13, 118) having two legs and a base connecting the legs, and, optionally, wherein at least one of the legs is an elongate member having a length to width (L/W) ranging from ranging from 3:1 to 20:1, preferably from 5:1 to 20:1 or from 10:1 to 20:1,

6. The method of at least one of the previous claims, wherein the step of inserting a fastener is repeated to dispose a plurality of spaced fasteners (13, 113, 18, 118) preferably axially along the splice (10, 110), wherein the distance or the axial distance between adjacent fasteners (10, 110) ranges from 0.5 to 5 cm, preferably from 1 to 3 cm.

7. The method of at least one of the previous claims, wherein before inserting the fastener (13, 113, 18, 118), the second curable compound is cooled to a temperature low enough to prevent flexure of the fastener (13, 113, 18, 118) during the insertion.

8. The method of at least one of the previous claims, wherein the splice (10, 110) is a skive splice (15).

9. The method of at least one of the previous claims, wherein the splice (10, 110) is a butt splice.

10. The method of at least one of the previous claims, wherein the first curable rubber compound comprises a diene based elastomer and from 70 to 200 phr of silica or from 100 to 160 phr of silica.

11. The method of at least one of the previous claims, wherein the first curable rubber compound is different from the second curable rubber compound.

12. The method of at least one of the previous claims 1 to 10, wherein the first curable rubber compound is of the same composition or substantially of the same composition than the second curable rubber compound.

13. A method of building a tire, the method comprising the steps of:
applying a length of tread stock to a tire build on a tire building machine, wherein the tread stock comprises an uncured first curable rubber compound comprising a diene based elastomer and from 70 to 200 phr of silica, the length of tread stock having two ends (11, 12, 111, 112);
opposing the two ends (11, 12, 111, 112) as a splice (10, 110); and
inserting a fastener (13, 113, 18, 118) into both of the two ends (11, 12, 111, 112) to secure the splice (10, 110) using the method in accordance with at least one of the previous claims.

14. A method of building a tire, the method comprising the steps of:
applying a length of tread stock to a tire build on a tire building machine, wherein the tread stock comprises an uncured first curable rubber compound comprising a diene based elastomer and from 70 to 200 phr of silica, the length of tread stock having two ends (11, 12, 111, 112);
opposing the two ends (11, 12, 111, 112) as a splice (10, 110); and inserting a fastener (13, 113, 18, 118) into both of the two ends (11, 12, 111, 112), wherein the fastener (13, 113, 18, 118) consists of an uncured second curable rubber compound cooled to a temperature low enough to prevent flexure of the fastener (13, 113, 18, 118) during the insertion.

15. The method of claim 12 or 13, wherein the second curable rubber compound is cooled to a temperature below the glass transition temperature of the second curable rubber compound.
